# EUROPÄISCHE PATENTANMELDUNG

(11) **EP 1 830 157 A1**
(43) Veröffentlichungstag der Anmeldung: **05.09.2007**
(21) Anmeldenummer: 06004201.7
(22) Anmeldetag: 02.03.2006
(51) Int. Cl.: G01B 11/24, G06K 19/06, G01M 17/013

(54) **Vorrichtung und Verfahren zum automatischen Vermessen von Felgen**

(71) Anmelder: Numtec-Interstahl GmbH, 4844 Regau (AT)
(72) Erfinder: Parzmair, Raimund, Ing., 4691 Breitenschützing (AT)
(74) Vertreter: Ofner, Clemens

(57) **Zusammenfassung**

Die Erfindung beschreibt eine Vorrichtung (1) zum automatischen Vermessen von, insbesondere zumindest annähernd drehsymmetrischen. Messobjekten (2) umfassend mindestens eine berührungslos messende Sensorvorrichtung (4) zum Erfassen von Konturpunkten. Die Sensorvorrichtung (4) und/oder das Messobjekt (2) ist mittels einer Positioniervorrichtung (13), welche eine Antriebsvorrichtung (20, 21) umfasst, verstellbar und die Sensorvorrichtung (4), insbesondere ein Sensor (107) und/oder ein weiterer Sensor (105), ist zum Erfassen einer am Messobjekt (2) angeordneten Markierung (25) ausgebildet. Weiters wird ein Verfahren zum optischen Vermessen eines zumindest annähernd rotationssymmetrischen Messobjektes beschrieben.

## Beschreibung

Die Erfindung betrifft eine Vorrichtung zum automatischen Vermessen von, insbesondere zumindest annähernd drehsymmetrischen, Messobjekten umfassend mindestens eine berührungslos messende Sensorvorrichtung zum Erfassen von Konturpunkten, ein Verfahren zum optischen Vermessen eines zumindest annähernd rotationssymmetrischen Messobjektes, insbesondere einer Felge, mit mindestens einer berührungslos messenden Sensorvorrichtung zum Erfassen von Konturpunkten sowie einen Datenträger.

Zur Sicherung einer ausreichend hohen Qualität in der Fertigungstechnik werden Werkstücke häufig nach einem Bearbeitungs- oder Herstellungsprozess vermessen. Besonders in der Automobilindustrie ist eine genaue Vermessung der Werkstücke notwendig, um eine hohe Lebensdauer bzw. Sicherheit des jeweiligen Werkstückes im Einsatz gewährleisten zu können. Beispielsweise werden Felgen, insbesondere Leichtmetallfelgen, nach dem Gießen geprüft, um somit festzustellen, ob ein Verzug des Werkstückes nach dem Gießvorgang innerhalb der vorgegebenen Grenzen liegt oder ob eine zum Gießen verwendete Kokille die Werkstücke mit ausreichender Qualität herstellt.

Es ist bekannt, dass in der Fertigungstechnik Messvorrichtungen mit taktilen Sensoren eingesetzt werden. Taktile Sensoren erfassen das Werkstück bzw. ein Messobjekt durch Berührung des Werkstückes. Ein derartiges Messverfahren bzw. Messsystem benötigt einen hohen Zeitaufwand, um das Messobjekt zu vermessen.

Aus der DE 10 2001 013 441 A1 ist ein Messverfahren und ein Messgerät zur Bestimmung der räumlichen Lage einer Radfelge sowie eine Fahrwerksvermessungseinrichtung bekannt. Dabei wird die räumliche Lage einer Radfelge zu einem Messgerät durch wenigstens eine Kamera bestimmt, in deren Blickfeld die Radfelge liegt. Zur.Erfassung von Geometriedetails der Radfelge werden Modellparameter eines Modellkörpers an das Bild der Radfelgen-Geometriedetails angepasst und verglichen. Bei diesem Messverfahren werden aufwendige Berechnungen und Umrechnungen von Bilddaten in Modelldaten benötigt.

Der vorliegenden Erfindung liegt die Aufgabe zugrunde, ein Messsystem bereitzustellen, welches ein genaues und universelles Vermessen von Messobjekten sowie eine Verbesserung der Automatisierung ermöglicht.

Diese Aufgabe der Erfindung wird dadurch gelöst, dass die Sensorvorrichtung und/oder das Messobjekt mittels einer Positioniervorrichtung, welche eine Antriebsvorrichtung umfasst, verstellbar ist und die Sensorvorrichtung, insbesondere ein Sensor und/oder ein weiterer Sensor, zum Erfassen einer am Messobjekt angeordneten Markierung ausgebildet ist bzw. durch Einlesen der Orientierung des Messobjektes durch die Sensorvorrichtung bzw. dass auf dem Datenträger ein Programm zur Ausführung eines Verfahrens nach einem der Ansprüche 26 bis 38 gespeichert ist.

Dadurch, dass die Sensorvorrichtung und/oder das Messobjekt mittels einer Positioniervorrichtung, welche eine Antriebsvorrichtung umfasst, verstellbar ist und die Sensorvorrichtung, insbesondere ein Sensor und/oder ein weiterer Sensor, zum Erfassen einer am Messobjekt angeordneten Markierung ausgebildet ist, wird der Vorteil erzielt, dass das Messobjekt präzise und automatisiert vermessbar ist. Mittels der Markierung kann festgestellt werden, welche Art von Messobjekten zu vermessen ist. Beispielsweise können die Messobjekte unabhängig von ihrer Orientierung, in welcher sie der Vorrichtung zum automatischen Vermessen zugeführt werden, und gegebenenfalls unabhängig von der Art bzw. der Gestalt des Messobjektes vermessen werden. Dadurch wird eine besonders universelle und automatisierte Vorrichtung zum Vermessen der Messobjekte bereitgestellt.

Durch Einlesen der Orientierung des Messobjektes durch die Sensorvorrichtung wird erreicht, dass vor dem eigentlichen Messvorgang die Lage des Messobjektes erfasst ist, wodurch spätere Mess- und/oder Handhabungsvorgänge wesentlich vereinfacht werden.

Dadurch, dass auf dem Datenträger ein Programm zur Ausführung eines Verfahrens nach einem der Ansprüche 26 bis 38 gespeichert ist, kann ein vorteilhaftes Verfahren gesichert werden und kostengünstig auf weitere Vorrichtungen übertragen werden.

Vorteilhaft ist auch eine weitere Ausführungsform, bei der das Messobjekt durch eine Felge gebildet ist. Die Vorrichtung zum automatischen Vermessen eignet sich besonders in Kombination mit Felgen als Messobjekt, da diese besonders effizient vermessen werden können. Durch eine Markierung an den Felgen kann mittels der Sensorvorrichtung die Art der Felge bestimmt werden, wodurch eine manuelle Eingabe der Art der Felge entfallen kann.

Vorteilhaft ist weiters eine Ausbildung, bei der eine Fördervorrichtung zum Befördern des Messobjektes in eine Messposition angeordnet ist bzw. eine Verfahrensvariante, bei der ein Zuführen des Messobjektes in eine Messposition durch eine Fördervorrichtung erfolgt. Dabei ist vorteilhaft, dass die Zuführung des Messobjektes in die Messposition automatisch erfolgt. Dadurch wird eine Handhabung von schweren bzw. schwer transportierbaren, beispielsweise von heißen Messobjekten, erleichtert. Insbesondere können dadurch auch beispielsweise nach einem Herstellungsvorgang durch Gießen noch heiße Messobjekte besser in eine Messposition gebracht werden. Eine zusätzliche Automatisierung wird erzielt und Kosten eingespart.

Durch die Ausbildung, bei der die Sensorvorrichtung, insbesondere der Sensor und/oder der weitere Sensor, mit einer elektronischen Steuereinrichtung verbunden ist bzw. bei der die elektronische Steuereinrichtung mindestens eine elektronische Auswertevorrichtung umfasst, ist es möglich, die Sensordaten gezielt auswerten zu können und die Sensoreinrichtungen zu koordinieren und anzusteuern.

Nach einer anderen Ausführungsvariante ist die elektronische.Auswertevorrichtung zum Dekodieren der Markierung, insbesondere eines in der Markierung enthaltenen Codes, ausgebildet. Dadurch kann eine in der Markierung enthaltene Information ausgewertet werden und für eine weitere Verarbeitung, beispielsweise für weitere Fertigungsvorrichtungen, zur Verfügung gestellt werden.

Vorteilhaft ist auch eine Weiterbildung, bei der die elektronische Auswertevorrichtung zum Umwandeln einer Position eines gemessenen Konturpunktes in einen elektronisch, verarbeitbaren Wert ausgebildet ist. Dadurch kann die Gestalt des Messobjektes aufgenommen werden und ein elektronisches Abbild des Messobjektes geschafften werden, wodurch eine vereinfachte Bearbeitung der Messdaten erzielt wird.

Durch eine Weiterbildung, bei der die elektronische Steuereinrichtung mindestens eine Recheneinheit, insbesondere einen Industrie-PC, umfasst, wird erreicht, dass die Steuereinrichtung eine Vielzahl von Funktionen übernehmen kann, insbesondere auch Funktionen, welche ein Auswerten und Archivieren der Messdaten ermöglichen.

Durch eine Ausbildung, bei der die Steuereinrichtung, insbesondere die Recheneinheit, eine Speichervorrichtung, insbesondere zum Speichern elektronisch verarbeitbarer Daten und/oder Programme, umfasst, kann erzielt werden, dass die Messdaten archiviert werden können bzw. dass Programmabläufe, beispielsweise ein Messprogrammablauf auf einfache Art und Weise gespeichert werden können.

Vorteilhaft ist auch eine Ausbildung, bei der die Steuereinrichtung eine Schnittstelleneinrichtung, insbesondere zum Übertragen von Daten an Handhabungsvorrichtungen, an Bearbeitungsvorrichtungen und/oder ein Prozessleitsystem, umfasst. Dadurch können Messdaten bzw. Informationen einer eingelesenen Markierung weiteren Bearbeitungsvorrichtungen oder Handhabungsvorrichtungen zur Verfügung gestellt werden wodurch diese weiteren Handhabungs- bzw. Bearbeitungsvorrichtungen besser auf das Messobjekt reagieren können. Beispielsweise kann durch die Kenntnis der Orientierung des Messobjektes aufgrund der eingelesenen Markierung eine nachfolgende Bearbeitungsmaschine ein Ventilloch, dessen Lage aufgrund der Markierung bekannt ist, nachbearbeiten.

Gemäß einer Ausbildung, bei der die Sensorvorrichtung, insbesondere der Sensor, zum Erfassen von Konturpunkten ausgebildet ist, welche an einer Stirnseite des Messobjektes liegen, kann gezielt eine Oberflächenstruktur eines zumindest annähernd drehsymmetrischen Messobjektes erfasst werden.

Nach einer vorteilhaften Weiterbildung, bei der die Sensorvorrichtung, insbesondere der weitere Sensor, zum Erfassen von Konturpunkten ausgebildet ist, welche auf der Umfangseite des Messobjektes liegen, wird eine genaue Vermessung der Umfangsseite erzielt.

Weiters ist vorteilhaft, dass die Markierung, insbesondere der Code, als Relief am Messobjekt ausgebildet ist bzw. dass das Relief durch Stege und/oder Vertiefungen gebildet ist. Dadurch kann beispielsweise ein Messobjekt erkannt werden, welches in einem Gießvorgang hergestellt wird und bei welchem die Kokille zur Herstellung des Messobjektes mit einer Markierung, beispielsweise einem Strichcode, welcher als Negativ in der Kokille angeordnet ist, versehen ist. Weiters ist vorteilhaft, dass das Relief schwer zu löschen ist und somit eine Verwechslung von mehreren Messobjekten verhindert wird.

Dadurch, dass die Stege oder Vertiefungen parallel zu einer Drehachse des Messobjektes liegen, ist vorteilhaft, dass die durch Stege und/oder Vertiefungen gebildete Markierung durch Drehen des Messobjektes vor der Sensorvorrichtung auslesbar ist. Dadurch wird eine Vereinfachung beim Messvorgang bzw. Scannvorgang durch die Sensoreinrichtung erreicht.

Vorteilhaft ist auch eine weitere Ausführungsform, bei der die Positioniervorrichtung zumindest zwei normal zueinander liegende und normal auf eine Drehachse des Messobjektes liegende Führungsbahnen aufweist. Dadurch kann die Sensorvorrichtung und/oder das Messobjekt in verschiedene Richtungen verfahren werden und dadurch werden Messvorgänge erleichtert.

Nach einer anderen Ausführungsvariante, bei der eine Haltevorrichtung zum zeitweisen Haltern des Messobjektes, insbesondere der Felge, angeordnet ist, bzw. nach einer Verfahrensvariante, bei der ein Klemmen des Messobjektes mittels einer Haltevorrichtung erfolgt, ist vorteilhaft, dass das Messobjekt fixiert werden kann und dadurch die Präzision der Vorrichtung zum Messen verbessert wird.

Durch eine Weiterbildung, bei der die Haltevorrichtung, insbesondere in Richtung der Drehachse des Messobjektes, drehbar ist, wird erreicht, dass eine Umfangsseite des Messobjektes bzw. eine Markierung am Messobjekt besser eingelesen bzw. abgetastet werden kann. Beispielsweise kann dadurch eine stationäre Sensorvorrichtung verwendet werden, an der das Messobjekt vorbeibewegt bzw. vor der das Messobjekt vor der Sensorvorrichtung gedreht wird.

Vorteilhaft ist weiters eine Ausbildung, bei der die Haltevorrichtung mit einer Antriebsvorrichtung zum Drehen und/oder Positionieren verbunden ist, bzw. eine Verfahrensvariante, bei der ein Drehen des Messobjektes um die eigene Drehachse zum Erkennen einer an der Umfangseite liegenden Orientierungsmarkierung erfolgt. Dadurch kann das Messobjekt automatisch in eine Messposition gebracht werden bzw. durch das Drehen der Haltevorrichtung kann beispielsweise ein Scannvorgang an der Umfangsseite des Messobjektes durch die Sensoreinrichtung durchgeführt werden.

Bei der Ausgestaltung, bei der eine Hebevorrichtung zum Positionieren des Messobjektes in Richtung der Drehachse des Messobjektes angeordnet ist bzw. bei der die Hebevorrichtung eine Antriebsvorrichtung, insbesondere einen Pneumatikzylinder, umfasst, bzw. bei einer Verfahrensvariante, bei der ein Anheben des Messobjekts, insbesondere ein Anheben der Haltevorrichtung durch eine Hebevorrichtung erfolgt, ist vorteilhaft, dass dadurch das Messobjekt angehoben werden kann und in eine Messposition gebracht werden kann. Dadurch wird erreicht, dass die Sensorvorrichtung in einer erhöhten Position angeordnet sein kann und dadurch vor Staub besser geschützt ist. Weiters ist dabei vorteilhaft, dass die Sensorvorrichtung in einer gewissen Höhe vor einem fehlgeleiteten Messobjekt geschützt ist. Ein weiterer Vorteil, der durch die Hebevorrichtung erzielbar ist, ist, dass dadurch ein Scannen des Messobjektes in einer Richtung parallel zur Drehachse des Messobjektes ermöglicht ist.

Gemäß einer weiteren Ausbildung, ist es möglich, dass eine oder mehrere Antriebsvorrichtungen, gegebenenfalls zumindest indirekt, insbesondere über eine pneumatische und/oder hydraulische Steuervorrichtung, mit einer elektronischen Steuereinrichtung verbunden sind. Dadurch kann ein Ablauf gesteuert werden und eine präzise Koordination der Antriebsvorrichtungen ermöglicht werden.

Eine weitere Ausbildungsform sieht vor, dass eine lichte Breite eines Abgaberaumes und/oder eines Annahmeraumes für das Messobjekt zumindest in etwa 500 mm, insbesondere im Bereich von 950 mm, beträgt. Dadurch wird erreicht, dass auch relativ große Messobjekte vermessen werden können bzw. dass dadurch das Zuführen bzw. Abführen von Messobjekten aus der Messposition, beispielsweise durch einen Bediener oder ein Handhabungsgerät, erleichtert wird.

Von Vorteil ist aber auch eine Ausbildung, bei der im Abgaberaum und/oder im Annahmeraum ein Sensor zum Erkennen eines Messobjektes angeordnet ist. Dadurch kann erkannt werden, wann bzw. ob ein Messobjekt zum Vermessen zugeführt wird bzw. ob ein Messobjekt die Vorrichtung zum Vermessen des Messobjektes verlässt.

Dadurch, dass der Sensor durch einen Lichtschrankensensor gebildet ist, wird ein wartungsarmer Sensor bereitgestellt.

Bei einer Verfahrensvariante, bei der ein Drehen des Messobjektes um die eigene Drehachse zum Einlesen eines an der Umfangseite liegenden Codes erfolgt, ist vorteilhaft, dass dadurch ein an einer beliebigen Stelle der Umfangseite liegender Code eingelesen werden kann, d.h. das Messobjekt kann mit einer beliebigen Orientierung zugeführt werden.

Weiters ist ein Vorgehen vorteilhaft, bei dem ein Einlesen einer am Messobjekt angeordneten Markierung, insbesondere durch Einlesen eines als Relief am Messobjekt angeordneten Codes, erfolgt. Dadurch kann das Messobjekt identifiziert werden und ein speziell auf das Messobjekt abgestimmter Messablauf durchgeführt werden. Weiters ist dabei vorteilhaft, dass dadurch die Messdaten eindeutig einem Messobjekt zugeordnet werden können und in einer Qualitätssicherungs-Datenbank zu jedem Messobjekt gespeichert werden können. Weiters können nachfolgende Handhabungs- und Fertigungsvorrichtungen darüber informiert werden, welcher Bearbeitungsschritt mit dem Messobjekt durchgeführt werden soll.

Eine weitere Vorgehensweise ist durch das Verwenden eines Triangulationsverfahrens zum Aufnehmen der Positionswerte der Konturpunkte gegeben. Durch ein Triangulationsverfahren ist ein besonders genaues, berührungsloses und relativ einfaches Verfahren zum Vermessen der Gestalt eines Messobjektes gegeben.

Vorteilhaft ist weiters eine Vorgehensweise, bei der ein Abrufen eines dem eingelesenen Code entsprechenden Ablaufprogramms aus einer Speichervorrichtung erfolgt. Dadurch kann für mehrere Messobjekte jeweils ein spezielles Messprogramm oder ein spezieller Messablauf, bei dem spezielle Messpunkte vermessen werden, hinterlegt werden und je nach zugeführtem Messobjekt aufgrund des eingelesenen Codes ein Programm ausgeführt werden. Dadurch wird die Flexibilität der Vorrichtung zum automatischen Vermessen von Messobjekten wesentlich erhöht.

Weiters ist ein Vorgehen vorteilhaft, bei dem ein Ermitteln der Drehachse des Messobjektes mittels Überfahren einer Außenkontur des Messobjektes an mindestens drei Stellen erfolgt. Dadurch kann auf schnelle, einfache und kostengünstige Art und Weise ein Referenzpunkt bzw. die Drehachse ermittelt werden. Es werden keine zusätzlichen Sensorvorrichtungen zum Ermitteln der Drehachse benötigt.

Vorteilhaft ist auch eine Verfahrensvariante, gemäß der ein Aufnehmen von Konturpunkten entsprechend eines in der Speichervorrichtung abgelegten Ablaufprogramms erfolgt. Dadurch kann eine Vielzahl von verschiedenartigen Messobjekten ohne manuelles Umstellen oder Einstellen der Vorrichtung zum automatischen Vermessen bereitgestellt werden.

Weiters ist ein Vorgehen, bei dem ein Drehen des Messobjektes in eine Abgabeorientierung erfolgt, vorteilhaft, da dadurch die Handhabung durch nachfolgende Handhabungsvorrichtungen erleichtert wird.

Eine weitere vorteilhafte Vorgehensweise sieht vor, dass ein Bereitstellen der Positionswerte der Konturpunkte für Handhabungsvorrichtungen, Bearbeitungsvorrichtungen und/oder ein Prozessleitsystem erfolgt. Dadurch kann beispielsweise das Messobjekt durch eventuell festgestellte Fertigungsungenauigkeiten entsprechend nachbearbeitet oder aus einem Fertigungsverfahren ausgeschieden und somit Kosten eingespart werden. Weiters können Fertigungsmaschinen, welche vor dem Messprozess stehen, entsprechend den weitergeleiteten Messdaten kalibriert werden. Durch die Weiterleitung der Positionswerte von Konturpunkten bzw. der Messdaten an ein Prozessleitsystem, kann ein Fertigungsprozess des Messobjektes beeinflusst werden. Beispielsweise können Handhabungsvorrichtungen so gesteuert werden, dass das Messobjekt entsprechend der Markierung zu bestimmten Bearbeitungsvorrichtungen gefördert wird, ohne dass ein händisches Eingreifen oder Steuern durch ein Bedienpersonal notwendig ist.

Weitere erzielbare Effekte bzw. Vorteile können der nachfolgenden speziellen Beschreibung entnommen werden.

Die Erfindung wird im Nachfolgenden anhand der in den Zeichnungen dargestellten Ausführungsbeispiele näher erläutert.

Es zeigen:
- Fig. 1: eine perspektivische Ansicht einer Vorrichtung zum automatischen Vermessen eines Messobjektes;
- Fig. 2: ein drehsymmetrisches Messobjekt mit Code;
- Fig. 3: eine Halte- und Hebevorrichtung zum Haltern eines Messobjektes für eine Vorrichtung zum Vermessen eines Messobjektes;
- Fig. 4: eine weitere Ausführungsform einer Halte- und Hebevorrichtung für eine Vorrichtung zum Vermessen eines Messobjektes;
- Fig. 5: eine Niveaueinstellvorrichtung für eine Vorrichtung zum Vermessen eines Messobjektes;
- Fig. 6: eine schematische Darstellung einer Steuervorrichtung für eine Vorrichtung zum Vermessen eines Messobjektes;
- Fig. 7: eine Seitenansicht einer Ausführungsform einer Vorrichtung zum Vermessen eines Messobjektes;
- Fig. 8: eine Frontansicht von Fig. 7;
- Fig. 9a: eine Draufsicht eines Messobjektes in Annahmeposition;
- Fig. 9b: eine Draufsicht eines Messobjektes in Messposition;
- Fig. 9c: eine Draufsicht eines Messobjekts in Abgabeposition.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Vorrichtung zum automatischen Vermessen, insbesondere zumindest annähernd drehsymmetrischer Messobjekte, beispielsweise Felgen, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

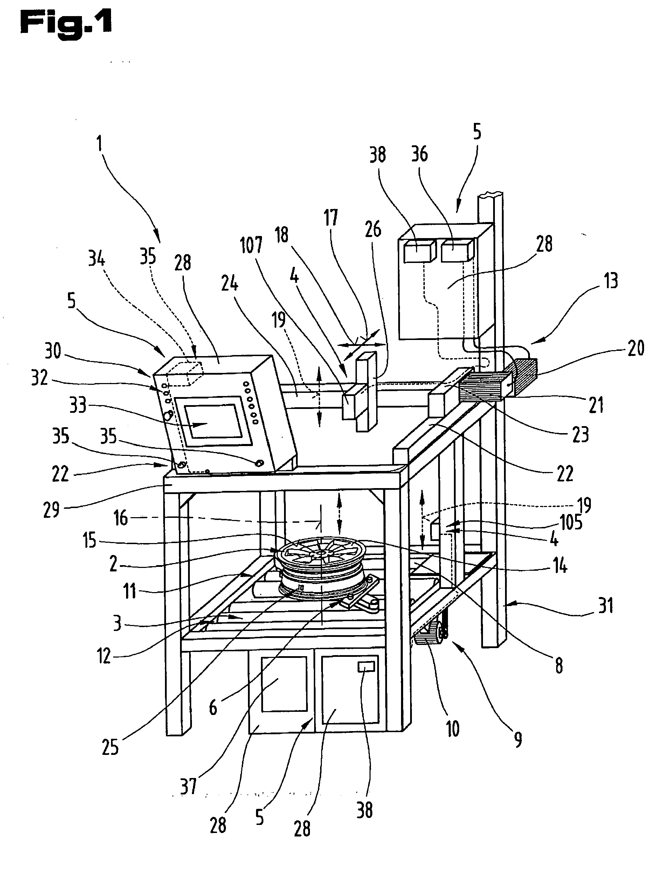

Fig. 1 zeigt eine Vorrichtung 1 zum automatischen Vermessen, insbesondere zumindest annähernd drehsymmetrischer, Messobjekten 2, umfassend eine Fördervorrichtung 3, eine Sensorvorrichtung 4, eine Steuereinrichtung 5, eine Haltevorrichtung 6 und ein Grundgestell 7.

Die Fördervorrichtung 3 ist zum Befördern der Messobjekte 2 ausgebildet und ist vorzugsweise durch Rollen 8 gebildet, welche über einen Zugmitteltrieb, insbesondere durch einen Kettentrieb, mittels einer Antriebsvorrichtung 10 angetrieben sind. Die Fördervorrichtung 3 ist durch eine Annahmefördervorrichtung 11, welche das Messobjekt 2 zur Haltevorrichtung 6 befördert, und durch eine Abgabefördervorrichtung 12 gebildet, welche zum Befördern des Messobjektes 2 von der Haltevorrichtung 6 weg, beispielsweise zu einem nachfolgenden Förderabschnitt, ausgebildet ist: Die Antriebsvorrichtung 10 der Fördervorrichtung 3, insbesondere ein Elektromotor, ist bevorzugt zum Antreiben der Annahmefördervorrichtung 11 und/oder der Abgabefördervorrichtung 12 ausgebildet.

Eine weitere Ausführungsform sieht vor, dass die Fördervorrichtung 3, insbesondere die Annahmefördervorrichtung 11 und/oder die Abgabefördervorrichtung 12, durch ein Förderband und/oder eine Förderkette gebildet ist. Dabei ist vorteilhaft, dass dadurch auch kleinere Teile befördert werden können.

Eine weitere Ausbildungsform sieht vor, dass für die Annahmefördervorrichtung 11 und die Abgabefördervorrichtung 12 jeweils eigene Antriebsvorrichtungen 10 angeordnet sind. Dadurch können die Annahmefördervorrichtung 11 und die Abgabefördervorrichtung 12 getrennt voneinander angetrieben werden. Um Kosten zu sparen ist es auch möglich, dass nur eine der beiden Annahmefördervorrichtung 11 und Abgabefördervorrichtung 12 mit der Antriebsvorrichtung 10 verbunden ist.

Die Fördervorrichtung 3, insbesondere die Annahmefördervorrichtung 11 und/oder die Abgabevorrichtung 12, und/oder ein oder mehrere der drehbar gelagerten Rollen 8 der Fördervorrichtung 3, weisen ein Zahnrad bzw. ein Kettenrad auf, mittels welchem ein Drehmoment von der Antriebsvorrichtung 10, insbesondere dem Elektromotor, via einen Zugmitteltrieb 9, insbesondere einer Kette, und/oder einen Zahn-, Keil- oder Flachriemen, auf die Fördervorrichtung 3 übertragen wird.

Die Annahmefördervorrichtung 11 und die Abgabefördervorrichtung 12 weisen bevorzugt zwei bis sechs, insbesondere vier, der drehbar gelagerten Rollen 8 auf.

Um das Messobjekt 2 zu vermessen, ist, beispielsweise am Grundgestell 7, zumindest eine Sensorvorrichtung 4 angeordnet. Die Sensorvorrichtung 4 ist vorzugsweise an einer Positioniervorrichtung 13, welche zum Positionieren der Sensorvorrichtung 4 ausgebildet ist, angeordnet. Die Sensorvorrichtung 4 ist zum Erfassen der dreidimensionalen Gestalt zumindest eines Abschnittes des Messobjektes 2 ausgebildet. Die Sensorvorrichtung 4 ist durch eine berührungslos messende Messvorrichtung bzw. einen berührungslos messenden Sensor gebildet, welcher zum Erfassen einer Kontur und/oder eines Konturpunktes 14 der Oberfläche des Messobjektes 2 ausgebildet ist. Beispielsweise ist die Sensorvorrichtung 4 dazu ausgebildet, das Messobjekt 2, insbesondere mit Laserlicht, zu beleuchten und eine vom Messobjekt 2, insbesondere durch Reflexion, zurückgeworfene Abstrahlung mit zumindest einem lichtempfindlichen Sensor zu messen bzw. abzutasten. Die Sensorvorrichtung 4 ist bevorzugt durch einen optischen Sensor, insbesondere einen Triangulationssensor, gebildet. Die Sensorvorrichtung 4 umfasst vorzugsweise einen elektronischen Schaltkreis. Eine Ausführungsvariante sieht vor, dass die Sensorvorrichtung 4 bzw. deren elektronischer Schaltkreis einen optoelektronischen Sensor, insbesondere einen aus mehreren Einzelsensoren bestehenden Zeilensensor, einen Prozessor, insbesondere einen Mikrocontroller, gegebenenfalls Analog-Digital-Wandler-Bausteine und Schnittstellenvorrichtungen zum Verarbeiten und zur Weitergabe eines Mess-Signals umfassen.

Zumindest ein Sensor 107 der Sensorvorrichtung 4 ist zum Abtasten einer Stirnseite 15 des Messobjektes 2, insbesondere der Felge, ausgebildet. Die Stirnseite 15 weist eine in etwa zu einer Drehachse 16 normal liegende Oberfläche auf.

Zum Verstellen bzw. Verfahren der Sensorvorrichtung 4 ist diese zumindest teilweise, insbesondere der Sensor 107, an der Positioniervorrichtung 13 angeordnet. Die Positioniervorrichtung 13 ist bevorzugt in mindestens zwei zueinander zumindest annähernd orthogonal liegende Richtungen 17, 18 verfahrbar. Bevorzugt liegen die zwei Richtungen 17, 18, in welche die Sensorvorrichtung 4 verfahrbar ist, normal auf die Drehachse 16 des Messobjektes 2. Es ist jedoch auch möglich, dass die Positioniervorrichtung 13 zum Verstellen bzw. Verfahren der Sensorvorrichtung 4 in einer Richtung 19 parallel zur Drehachse 16 des Messobjektes 2 ausgebildet ist.

Die Positioniervorrichtung 13 zum Verstellen bzw. Verfahren der Sensorvorrichtung 4 umfasst zumindest zwei Antriebsvorrichtungen 20, 21, insbesondere Elektromotoren, welche zum Verfahren bzw. Verstellen der Sensorvorrichtung 4 in jeweils eine Richtung 17, 18, 19 ausgebildet sind. Die Positioniervorrichtung 13 ist bevorzugt durch eine Portalpositioniervorrichtung gebildet. Zwei parallel angeordnete Führungsbahnen 22 sind bevorzugt am Grundgestell 7 angeordnet, insbesondere angeschraubt. Die zwei parallel liegenden Führungsbahnen 22 führen jeweils einen Schlitten 23. Diese Schlitten 23 werden mit Hilfe der Antriebsvorrichtung 20 und einer Vorrichtung zur Umsetzung einer Drehbewegung in eine Linearbewegung, beispielsweise einer Kugelgewindespindel, angetrieben. Zur Synchronisierung der Bewegung der beiden auf den zwei parallel liegenden Führungsbahnen 22 geführten Schlitten 23, werden die Kugelgewindespindeln der parallel liegenden Führungsbahnen 22 mittels einer Synchronisationswelle synchronisiert. An den beiden Schlitten 23 der parallel liegenden Führungsbahnen 22 ist eine weitere, zur ersten Führungsbahn normal liegende, Führungsbahn 24 angeordnet. Die Führungsbahn 24 führt einen weiteren Schlitten 26, auf welchem die Sensorvorrichtung 4, insbesondere der Sensor 107, angeordnet ist. Der Schlitten 26 auf der Führungsbahn 24 wird durch die Antriebsvorrichtung 21 beispielsweise mittels einer Kugelgewindespindel angetrieben.

Eine bevorzugte Ausführungsform der Vorrichtung 1 zum automatischen Vermessen, insbesondere zumindest annähernd drehsymmetrischer, Messobjekte 2 sieht vor, dass am Grundgestell 7 und/oder an der Positioniervorrichtung 13, insbesondere an einem Schlitten 23, 26 der Positioniervorrichtung 13, eine weitere Sensorvorrichtung 4, insbesondere ein Sensor 105, angeordnet ist. Die weitere Sensorvorrichtung 4 bzw. der weitere Sensor 105 ist bevorzugt zum Erfassen bzw. Messen bzw. Einlesen von sich auf einer Umfangsseite 27 befindlichen Konturpunkten 14, einer Markierung 25 auf dem Messobjekt 2, Oberflächenbeschaffenheiten und/oder Informationen ausgebildet.

Zur Koordinierung der Antriebsvorrichtungen 10, 20, 21 und/oder der Sensorvorrichtungen 4 und weiterer steuerbare, regelbare und/oder messende Vorrichtungen sind diese mit der Steuervorrichtung 5 verbunden. Die, insbesondere aus mehreren Steuerbaugruppen 28 bestehende, Steuervorrichtungen 5, ist beispielsweise am Grundgestell 7 angeordnet. Die Steuervorrichtung 5 umfasst eine, insbesondere an der Frontseite 29 des Grundgestells 7 angeordnete, Recheneinheit 30 und weitere Steuerbaugruppen 28, welche beispielsweise an der Rückseite 31 und/oder in einem unteren Abschnitt des Grundgestells 7, beispielsweise, unterhalb der Fördervorrichtung 3, angeordnet sind.

Die Recheneinheit 30 umfasst Eingabevorrichtungen 32, Ausgabevorrichtungen 33 und eine bevorzugt mit einer Prozessoreinheit verbundene Speichervorrichtung 34, insbesondere einen Datenspeicher 35. Weiters weist die Recheneinheit 30 eine Schnittstelle auf bzw. ist diese mit einer Schnittstellenvorrichtung verbunden, durch welche weitere Steuerbaugruppen 28, insbesondere hydraulische, pneumatische und/oder elektrische Steuer- bzw. Antriebsvorrichtungen, anschließbar sind bzw. verbindbar sind. Die Schnittstelle bzw. die Schnittstellenvorrichtung weist auch Eingänge auf, welche zum Einlesen von Sensordaten bzw. Signalen oder sonstigen Eingangssignalen ausgebildet sind. Die Recheneinheit 30 weist auch eine Schnittstelle auf, mit welcher die Recheneinheit 30 an ein lokales und/oder globales Netzwerk, beispielsweise dem Internet, anschließbar ist. Die Schnittstellen bzw. die Verbindungen können gemäß einem oder mehreren der Standardverbindungen serielle Datenverbindung, parallele Datenverbindung, beispielsweise über eine Centronics-Schnittstelle, USB(Universal-Serial-Bus)-Verbindung, Profibus, WLAN (Wireless-Lokal-Area-Network), insbesondere gemäß einer der IEEE 802.11 Standardverbindungen, LAN (Lokal-Area-Network), beispielsweise eine Ethernet- oder Fast Ethernet-Verbindung, Bluetooth, Infrarot-Verbindung, Lichtleiter- bzw. Glasfaserkabel-Verbindung, einer leitungsgebundenen und/oder kabellosen Telefonverbindung und dergleichen gebildet sein.

Die Eingabevorrichtung 32 der Recheneinheit 30 umfasst mehrere Tasten, insbesondere eine Tastatur, einen Touch-Screen, ein oder mehrere Zeigegeräte und/oder Lesegeräte, insbesondere Kameras und/oder Scanner. Die Tastatur der Eingabevorrichtung 32 weist bevorzugt eine Haltevorrichtung auf, durch welche die Tastatur, insbesondere durch Magnetwirkung, am Grundgestell 7 befestigbar ist. Weiters weist die Tastatur ein Touch-Feld auf, mit welchem ein Zeigegerät steuerbar ist. Die Tastatur kann durch ein flexibles Kabel und/oder durch berührungslose Datenübertragungsvorrichtungen mit der Recheneinheit 30 verbunden sein. Weiters umfasst die Eingabevorrichtung 32 zwei Sicherheitsbedienelemente 35, welche in einem ausreichenden Abstand, insbesondere an der Frontseite 29 des Grundgestells 7, angeordnet sind und für eine Zweihand-Sicherheitsbedienung ausgebildet sind. Ein Mess- und/oder Handhabungsvorgang kann beispielsweise mit Hilfe dieser Zweihand-Sicherheitsbedienung sicher gestartet werden. Die Eingabevorrichtung 32 weist weiters ein oder mehrere Notausschalter auf.

Die Ausgabevorrichtung 33 umfasst einen Bildschirm, insbesondere einen Touch-Screen, und/oder weitere optische und/oder akustische Ausgabevorrichtungen, wie beispielsweise einen Lautsprecher für Signaltöne bzw. eine Warnlampe.

Die Speichervorrichtung der Recheneinheit 30 ist durch eine Festplatte, ein CD- oder DVD-Laufwerk mit dem entsprechenden Datenträger; ein Diskettenlaufwerk mit entsprechendem Datenträger, RAM- und/oder ROM-Bausteinen, ein Magnetbandlaufwerk mit entsprechendem Datenträger und/oder einem an einem USB-(Universal Serial Bus-) Eingang anschließbaren, nicht flüchtigen Speicher gebildet.

Die weiteren Baugruppen 28 der Steuereinrichtung 5 umfassen Steuervorrichtungen 36, welche zum Ansteuern von Schritt- bzw. Servomotoren ausgebildet sind, pneumatische und/oder hydraulische Steuervorrichtungen 37, welche elektronische Steuersignale in hydraulische und/oder pneumatische Aktivitäten, beispielsweise Öffnen und Schließen von Ventilen, umsetzen können und Auswertevorrichtungen 38, welche Signale der Sensorvorrichtungen 4 auswerten können und insbesondere zur Recheneinheit 30 übertragen können.

Das Grundgestell 7 der Vorrichtung 1 zum automatischen Vermessen zumindest annähernd drehsymmetrischer Messobjekte 2 ist bevorzugt durch Formrohre mit T-nutförmigen Ausnehmungen, insbesondere aus Aluminium, gebildet. Am Grundgerüst 7 sind bevorzugt Seitenabdeckungen und/oder eine Abdeckung an der Oberseite der Vorrichtung 1 angeordnet. Dadurch kann eine Verletzungsgefahr vermieden werden und das Eindringen von Schmutzpartikel und sonstigen Fremdkörpern vermieden werden.

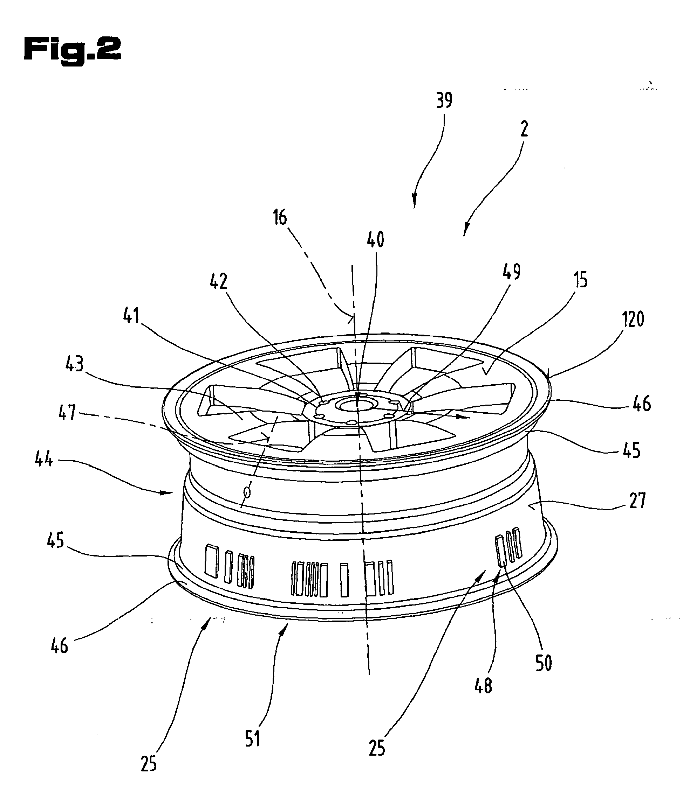

In der Fig. 2 ist eine Ausftihrungsform des Messobjektes 2 gezeigt. Um unnötige Wiederholungen zu vermeiden, werden für gleiche Teile gleiche Bezugszeichen bzw. Bauteilbezeichnungen, wie in der vorangegangen Fig. 1, verwendet und auf die detaillierte Beschreibung in der vorangegangen Fig. 1 hingewiesen bzw. Bezug genommen.

Das Messobjekt 2 ist bevorzugt durch eine Felge 39, insbesondere aus Leichtmetall, oder durch einen Bauteil oder einer Komponente einer Felge 39 gebildet. Aufgrund des Herstellungsverfahrens der Messobjekte 2, insbesondere der Felgen 39, ergeben sich Herstellungsungenauigkeiten, wie beispielsweise ein Verzug und/oder Löcher bzw. Aussparungen. Zur nachhaltigen Verbesserung der Herstellungsqualität werden die Messobjekte 2, insbesondere die Felgen 39, vermessen.

Das Messobjekt 2 bzw. die Felge 39 weist die Drehachse 16, die Stirnseite 15, welche im wesentlichen zur Drehachse 16 normal liegt, und die Umfangsseite 27 auf.

Die Stirnseite 15 weist an der Stelle der Drehachse 16 eine Radnarbenbohrung 40 auf, um die Drehachse 16 bzw. die Radnarbenbohrung 40 sind entlang eines Lockreises 41 Bolzenlöcher bzw. Schraubenlöcher 42 angeordnet. Bevorzugt weist die Stirnseite 15 der Felge 39, insbesondere 3 bis 6, Speichen 43 auf.

Die Umfangsseite 27 umfasst ein Felgenbett 44 und an das Felgenbett 44 angrenzende Felgenschultern 45. Zwischen Felgenschulter 45 und einem Übergangsbereich zur Stirnseite 15 ist ein Felgenhorn 46 angeordnet. Zur Umfangsseite 27 führt weiters ein Ventilloch 47, in welches ein Ventil zum Befüllen eines auf der Felge 39 angeordneten Reifen ausgebildet ist.

In einer zum Ventilloch 47 bzw. zu einer Oberflächenstruktur des Messobjektes 2, insbesondere der Felge 39, bestimmten Lage ist bevorzugt die Markierung 25 am Messobjekt 2 angeordnet.

Bei der gezeigten Ausführungsform der Felge 39 ist als Teil der Markierung an der Umfangsseite 27, insbesondere im Felgenbett 44, eine Orientierungsmarkierung 48 angeordnet. Die Orientierungsmarkierung 48 liegt an einer, insbesondere zu den Speichen 43, zu den Schraubenlöchern 42 und/oder zum Ventilloch 47, genau definierten Position. Mit Hilfe der Orientierungsmarkierung 48 ist eine Orientierung 49 des Messobjektes 2 bzw. der Felge 39 mittels der Sensorvorrichtung 4, insbesondere mittels der Auswertevorrichtung 38 - Fig. 1 - und/oder der Recheneinheit 30 - Fig. 1 - oder einer weiteren Steuerbaugruppe 28 - Fig. 1 -, erkennbar. Die Orientierungsmarkierung 48 ist bevorzugt derart ausgebildet, dass bei einem Drehen des Messobjektes 2 bzw. der Felge 39 und einem punktweisen oder linienartigen Abtasten der Oberfläche, insbesondere der Umfangsseite 27, des Messobjektes 2 bzw. der Felge 39 durch die Sensorvorrichtung 4, insbesondere dem Sensor 107, die Rotationsrichtung erkannt werden kann. Beispielsweise ist die Orientierungsmarkierung 48 durch einen breiten und einen daneben liegenden schmalen Steg 50, welche bevorzugt parallel zur Drehachse 16 angeordnet sind, gebildet.

Weitere Ausführungsformen der Orientierungsmarkierung 48 sehen vor, die Orientierungsmarkierung 48 durch Vertiefungen, Farbmarkierungen und/oder einer durch eine Klebung oder magnetisch befestigter Markierung an der Umfangsseite 27 und/oder der Stirnseite 15 auszubilden.

Weiters umfasst die Markierung 25 einen am Messobjekt 2 bzw. der Felge 39 angeordneten Code 51, welcher Informationen über das Messobjekt 2, insbesondere über die Felge 39, enthält. Die Informationen umfassen Angaben über die Herstellung, insbesondere über die speziell verwendete Herstellungsvorrichtung, beispielsweise eine verwendete Kokille, das verwendete Material und/oder Informationen über Abmessungen des Messobjektes 2. Der Code 51 ist entsprechend einer der Ausführungsformen der Orientierungsmarkierung am Messobjekt 2, insbesondere der Umfangsseite 27, ausgeführt bzw. angeordnet. Da der Code 51 mehr Informationen enthält, ist dieser bevorzugt durch mehrere, ungleich beabstandete bzw. breite Stege 50 und/oder Vertiefungen oder dgl. gebildet.

Die Markierung 25, insbesondere der Code 51 bzw. die Orientierungsmarkierung 48, ist bevorzugt als Relief durch Stege bzw. Vertiefungen gebildet. Das Relief wird beispielsweise bereits bei einem Gießvorgang zur Herstellung des Messobjektes 2 miterzeugt. Es ist auch möglich, das Relief für die Markierung 25 durch Eingravieren oder Einschlagen herzustellen.

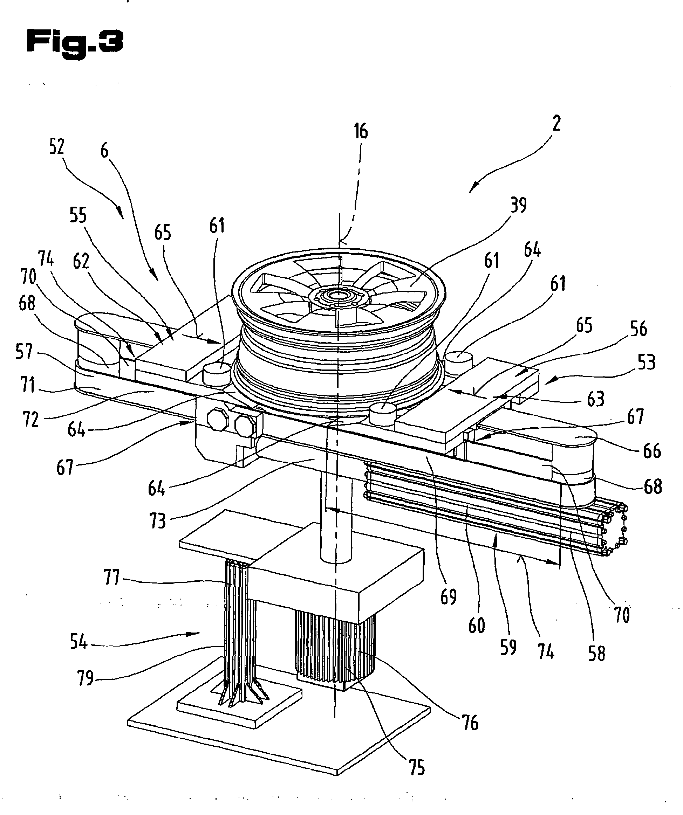

In der Fig. 3 ist eine Detaildarstellung einer weiteren und gegebenenfalls für sich eigenständigen Ausführungsform der Vorrichtung 1 zum automatischen Vermessen zumindest annähernd drehsymmetrischer Messobjekte 2 gezeigt, wobei wiederum für gleiche Teile gleiche Bezugszeichen bzw. Bauteilbezeichnungen, wie in den vorangegangenen Fig. 1 und 2, verwendet werden. Um unnötige Wiederholungen zu vermeiden, wird auf die detaillierte Beschreibung in den vorangegangen Fig. 1 und 2 hingewiesen bzw. Bezug genommen.

Fig. 3 zeigt eine Drehstation 52, welche eine Haltevorrichtung 6, 53 zum Haltern des Messobjektes 2, insbesondere der Felge 39, und eine Hebevorrichtung 44, welche zum Anheben bzw. Positionieren des Messobjektes 2, insbesondere der Felge 39, in Richtung der Drehachse 16 des Messobjektes 2 ausgebildet ist.

Die Haltevorrichtung 53 umfasst zwei zueinander bzw. auseinander bewegbare Schlitten 55, 56 zum Einspannen bzw. Klemmen des Messobjektes 2, insbesondere der Felge 39, einen Zugmitteltrieb 57 zum Bewegen der Schlitten 55, 56 und eine Antriebsvorrichtung 58, welche insbesondere durch einen Linearantrieb 59, beispielsweise einen Pneumatikzylinder 60 und/oder einen Hydraulikzylinder gebildet ist bzw. diese umfasst. Der Zugmitteltrieb 57 ist zur Synchronisierung der Bewegung der Schlitten 55, 56 ausgebildet.

Die Schlitten 55, 56 umfassen bevorzugt jeweils zwei zumindest annähernd zylinderförmige Backen 61 und jeweils einen Backengrundkörper 62, 63, auf welchen jeweils zwei der Backen 61 angeordnet sind und welche mit dem Zugmitteltrieb 57 bewegungsgekoppelt sind. Zwischen den Backen 61 der zwei Schlitten 55, 56 ist an den Schlitten 55, 56 jeweils eine Abschrägung 64 angeordnet. Die Abschrägung 64 ist insbesondere am Backengrundkörper 62, 63 ausgebildet. Die Abschrägung 64 ist so ausgebildet, um das Messobjekt 2, insbesondere die Felge 39, bei einem Klemmvorgang, bei welchem die zwei Schlitten 55, 56 synchron zueinander fahren, gegebenenfalls leicht anzuheben bzw. den Klemmvorgang zu erleichtern. Die Abschrägung 64 ist gegenüber einer normal auf die Drehachse 16 stehenden Ebene bzw. gegenüber einer Klemmrichtung 65 um ca. 10 ° bis ca. 45 °, insbesondere in etwa 20 °, geneigt.

Die Schlitten 55, 56, insbesondere die Backengrundkörper 62, 63, sind entlang der Klemmrichtung 65 mittels einer Führungsplatte 66 geführt. Die Führungsplatte 66 weist dabei Führungen auf bzw. sind an der Führungsplatte 66 Führungsbahnen angeordnet. Die Führung der Schlitten 55, 56, insbesondere der Backengrundkörper 62, 63, erfolgt dabei durch eine Gleitlagerung, eine lineare Kugelführung und/oder durch an den Schlitten 55, 56 angeordnete Rollen.

Um die beiden Schlitten 55, 56 bewegungszukoppeln bzw. anzutreiben, sind diese mittels einer Verbindungsvorrichtung 67 mit dem Zugmitteltrieb 57 verbunden. Um den Zugmitteltrieb 57 anzutreiben, ist zumindest ein Schlitten 55, 56, insbesondere eine Verbindungsvorrichtung 67 eines Schlitten 55, 56, mit der Antriebsvorrichtung 58 verbunden. Der Zugmitteltrieb 57 wird durch zwei Umlenkvorrichtungen 68 umgelenkt und gliedert sich in einen Antriebsabschnitt 69 und einen Abtriebsabschnitt 70. Der Zugmitteltrieb 57 ist bevorzugt durch einen Riementrieb 71, insbesondere einen Zahnriementrieb 72, gebildet. Weitere Ausbildungsformen sehen vor, den Zugmitteltrieb 57 durch einen Flachriemen, einen Keilriemen oder durch eine Kette bzw. einen Kettentrieb zu bilden. Es ist weiters möglich, den Zugmitteltrieb 57, insbesondere den Riementrieb 71, so anzuordnen, dass bei einem Ausfahren einer Kolbenstange 73 der Antriebsvorrichtung 58, insbesondere des Pneumatikzylinders, die Schlitten 55, 56 in Klemmrichtung 60 zueinander bewegt werden. Hierfür ist die Kolbenstange 73 mit einem Abschnitt 74 des Zugmitteltriebs 57 verbunden, welcher sich gegenüber von der Verbindungsvorrichtung 67 befindet.

Die Antriebsvorrichtung 58 zum Antreiben des Zugmitteltriebs 57 bzw. der beiden Schlitten 55, 56 ist einer weiteren Ausführungsform durch einen Elektromotor gebildet, welcher die Schlitten 55, 56 entweder durch einen Spindelantrieb bewegt bzw. antreibt oder direkt die Umlenkvorrichtung 68 antreibt, um dadurch den Zugmitteltrieb 57 anzutreiben. Eine weitere Ausführungsform sieht vor, die beiden Schlitten 55, 56 durch zwei voneinander getrennt angeordnete Antriebsvorrichtungen 58 anzutreiben. Dadurch kann der Zugmitteltrieb 57 eingespart werden bzw. kann dadurch das Messobjekt 2, insbesondere die Felge 39, zusätzlich einer parallel zur Klemmrichtung 65 liegenden Richtung bewegt bzw. positioniert bzw. zentriert werden.

Die Haltevorrichtung 53 der Drehstation 52 ist bevorzugt drehbar gelagert, um das Messobjekt 2, insbesondere die Felge 39, insbesondere in Richtung der Drehachse 16, rotieren zu können. Hierfür ist die Haltevorrichtung 53 mit einer Antriebsvorrichtung 75 bewegungsgekoppelt. Die Bewegungskopplung von der Antriebsvorrichtung 75 und Haltevorrichtung 53 erfolgt insbesondere durch eine Getriebevorrichtung, insbesondere einer Getriebevorrichtung, welche die Rotationsbewegung der Antriebsvorrichtung 75 um in etwa 90 ° umlenkt. Die Antriebsvorrichtung 75 ist bevorzugt durch einen Elektromotor, insbesondere durch einen Schrittmotor oder einen Servomotor 76, gebildet. Die Antriebsvorrichtung 75 ist mit der Steuereinrichtung 5, insbesondere mit der elektrischen Steuervorrichtung 36 oder der pneumatischen und/oder hydraulischen Steuervorrichtung 37, verbunden bzw. durch diese steuerbar. Eine weitere Ausführungsform sieht vor, die Antriebsvorrichtung 75 für die Drehbewegung der Haltevorrichtung 53 durch pneumatisch und/oder hydraulisch betriebene Vorrichtungen zu bilden.

Weiters ist eine Ausführungsform möglich, bei der die Getriebevorrichtung zwischen Antriebsvorrichtung 75 und der Haltevorrichtung 54 zum Übertragen einer Drehbewegung, insbesondere um die Drehachse 16, über eine variable Distanz, insbesondere in Richtung der Drehachse 16, zu überragen. Dies kann beispielsweise durch eine Keilwelle oder Zahnwelle erfolgen.

Um das Messobjekt 2 bzw. die Haltevorrichtung 53 in Richtung der Drehachse 16 linear verstellen zu können, umfasst die Drehstation 52 eine Hebevorrichtung 54, welche mit der Haltevorrichtung 53 verbunden ist. Die Hebevorrichtung 54 weist dabei eine Antriebsvorrichtung 77, insbesondere einen Linearantrieb 78, auf. Die Antriebsvorrichtung 77 bzw. der Linearantrieb 78 ist bevorzugt durch einen Pneumatikzylinder 79 gebildet.

Die Hebevorrichtung 54 ist vorzugsweise zumindest teilweise am Grundgestell - Fig. 1 - angeordnet bzw. befestigt. Eine Ausführungsform sieht auch vor, die Antriebsvorrichtung 75 zum Rotieren der Haltevorrichtung 53 bzw. des Messobjektes 2 am Grundgestellt 7 anzuordnen und die Haltevorrichtung über die Getriebevorrichtung zum Übertragen einer Drehbewegung über eine variable Distanz entlang der Drehachse 16 am Grundgerüst 7 anzutreiben.

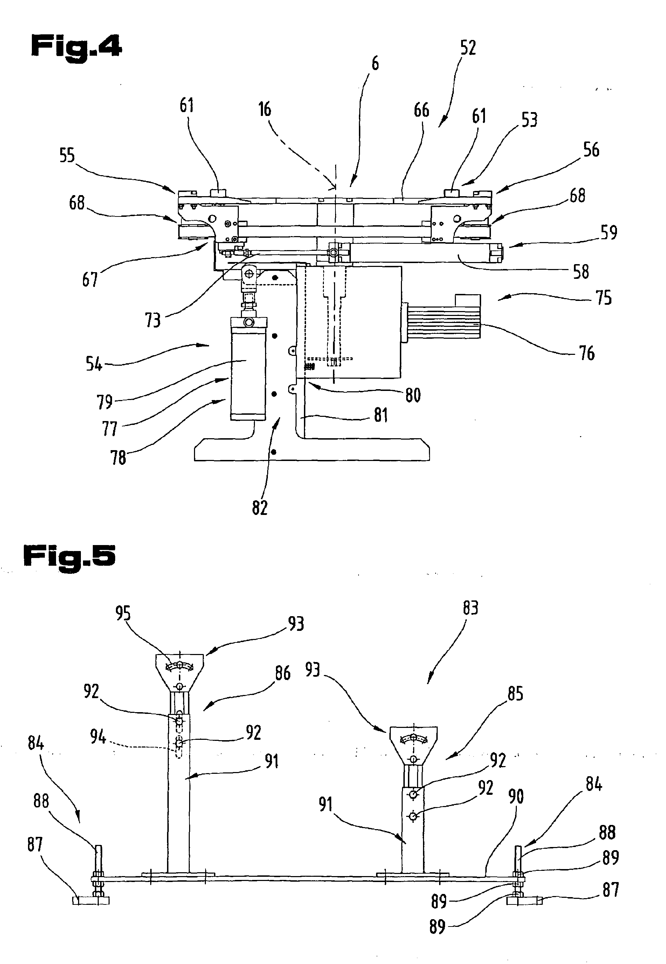

In der Fig. 4 ist eine Detaildarstellung einer weiteren und gegebenenfalls für sich eigenständigen Ausführungsform der Vorrichtung 1 - Fig. 1 - zum automatischen Vermessen zumindest annähernd drehsymmetrischer Messobjekte 2 gezeigt, wobei wiederum für gleiche Teile gleiche Bezugszeichen bzw. Bauteilbezeichnungen, wie in den vorangegangen Fig. 1 bis Fig. 3, verwendet werden. Um unnötige Wiederholungen zu vermeiden, wird auf die detaillierte Beschreibung in den vorangegangenen Fig. 1 bis 3 hingewiesen bzw. Bezug genommen.

Fig. 4 zeigt die Drehstation 52 im ungeklemmten Zustand und ohne Messobjekt 2. Die Schlitten 55, 56 befinden sich in einer Aufnahmeposition. Die Hebevorrichtung 54 befindet sich in einer abgesenkten Position. Zum Anheben der Haltevorrichtung 53 wird der Linearantrieb 78, insbesondere der Pneumatikzylinder 79 der Hebevorrichtung 54 ausgefahren. Ein mit der Haltevorrichtung 53 verbundener Teil bzw. Abschnitt der Hebevorrichtung 54 ist über eine Führungsvorrichtung 80, welche insbesondere eine Führungsbahn 81 umfasst, mit dem Grundgestell 7 verbunden. Die Hebevorrichtung 54 umfasst weiters eine Befestigungssäule 82, an welcher bevorzugt die Führungsbahn 81 bzw. die Führungsvorrichtung 80 angeordnet ist. Insbesondere ist auch die Antriebsvorrichtung 77 der Hebevorrichtung 54 an der Befestigungssäule 82 angeordnet bzw. mit dieser verbunden. Die Befestigungssäule 82 ist am Grundgestell 7 der Vorrichtung 1 - Fig. 1 - angeordnet.

In der Fig. 5 ist eine Detaildarstellung einer weiteren und gegebenenfalls für sich eigenständigen Ausführungsform der Vorrichtung 1- Fig. 1 - zum automatischen Vermessen des Messobjektes 2 - Fig. 2 - gezeigt, wobei wiederum für gleiche Teile gleiche Bezugszeichen bzw. Bauteilbezeichnungen, wie in den vorangegangenen Fig. 1 bis 4, verwendet werden. Um unnötige Wiederholungen zu vermeiden, wird auf die detaillierte Beschreibung in den vorangegangenen Fig. 1 bis 4 hingewiesen bzw. Bezug genommen.

Fig. 5 zeigt eine Niveaueinstellvorrichtung 83 der Vorrichtung 1 - Fig. 1. Die Niveaueinstellvorrichtung 83 ist mit dem Grundgestell 7 - Fig. 1 - verbunden und dient zum Angleichen eines Niveaus, insbesondere eines Handhabungsniveaus, der Vorrichtung 1 an der Vorrichtung 1 vor bzw. nachgeordnete Handhabungs- und/oder Fertigungsvorrichtungen bzw. dient diese zur Ausgleichung von Bodenunebenheiten. Die Niveaueinstellvorrichtung 83 umfasst ein oder mehrere Fußverstellvorrichtungen 84 und mehrere Höhenverstellvorrichtungen 85,86.

Durch die Fußverstellvorrichtung 84 kann ein Fuß 87 der Vorrichtung 1 - Fig. 1- verstellt werden. Die Fußverstellvorrichtung 84 umfasst bevorzugt eine linearverstellbare Vorrichtung, insbesondere eine Gewindespindel 88, auf welcher durch Muttern 89 eine Bodenplatte 90 befestigt ist. Oberhalb der Bodenplatte 90 ist das Grundgestell 7 - Fig. 1 - angeordnet.

Auf der Bodenplatte 90 sind die Höhenverstellvorrichtungen 85, 86 angeordnet. Eine Höhenverstellvorrichtung 85, 86 umfasst einen feststehenden Bauteil 91 und einen daran, insbesondere durch eine Schraubverbindung, beispielsweise durch zwei Schrauben 92, klemmbaren und verstellbaren Bauteil 93. Zum Verstellen des verstellbaren Bauteils 93 gegenüber dem feststehenden Bauteil 91 weist der verstellbare Bauteil 93 ein oder mehrere Langlöcher 94 auf. Der verstellbare Bauteil 93 ist gegenüber dem feststehenden Bauteil 91 bevorzugt in vertikaler Richtung verstellbar. Weiters weist der verstellbare Bauteil 93 ein weiteres Langloch 95, insbesondere ein kreisabschnittsförmig gebogenes Langloch 95, auf, durch welches das Grundgestell 7 und/oder die Fördervorrichtung 3 verstellbar befestigbar ist. Dadurch kann die Fördervorrichtung 3 bzw. das Grundgestell 7 bezüglich der Neigung und der Höhe eingestellt bzw: an weitere Handhabungs- und/oder Fertigungsvorrichtungen angepasst werden:

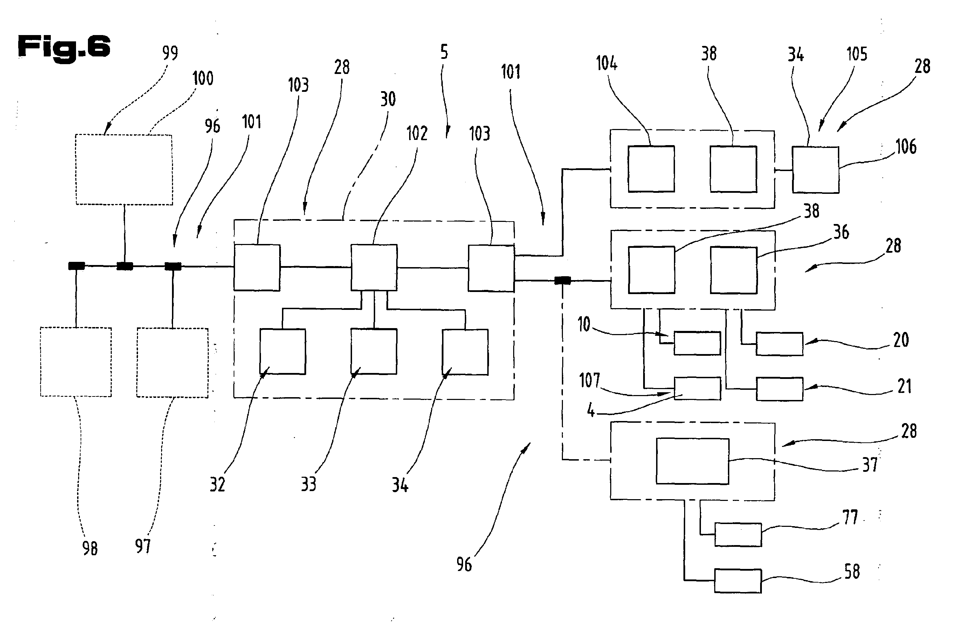

In der Fig. 6 ist eine schematische Detaildarstellung einer weiteren und gegebenenfalls für sich eigenständigen Ausführungsform der Vorrichtung 1 - Fig. 1 - zum automatischen Vermessen des Messobjektes 2 - Fig. 1 - gezeigt, wobei wiederum für gleiche Teile gleiche Bezugszeichen bzw. Bauteilbezeichnungen, wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Fig. 6 zeigt eine schematische Darstellung der Steuereinrichtung 5. Die Steuereinrichtung 5 umfasst dabei mehrere Steuerbaugruppen 28, welche mittels Verbindungen 96 untereinander verbunden sind und gegebenenfalls mit einer oder mehreren Handhabungsvorrichtungen 97, ein oder mehrerer Bearbeitungsvorrichtungen 98, mit ein oder mehreren Fertigungsvorrichtungen und/oder mit einem Prozessleitsystem 99, insbesondere einer Zentralrecheneinheit 100, verbunden sind. Die Verbindungen 96 sind bevorzugt durch Datenübertragungsleitungen 101, insbesondere durch elektrische und/oder optische Leiter- bzw. Bussysteme gebildet. Eine weitere Ausbildungsform sieht vor, dass die Verbindungen 96 zumindest teilweise durch drahtlose Datenverbindungen, wie beispielsweise mittels WLAN (Wireless Local Area Network), einer Bluetooth-Verbindung und/oder durch Infrarotverbindungen, hergestellt sind. Bevorzugt werden für die Verbindungen 96 parallele Datenkabel, serielle Datenkabel, wie z.B. USB, Profibus und/oder LAN-Verbindungen, verwendet.

Die Steuerbaugruppen 28 umfassen bevorzugt eine Recheneinheit 30, Sensoreinrichtungen 4, Auswertevorrichtungen 38, elektrische Steuervorrichtungen 36, pneumatische und/oder hydraulische Steuervorrichtungen 37.

Die Recheneinheit 30 umfasst bevorzugt eine Prozessoreinheit 102, die Eingabevorrichtung 32, die Ausgabevorrichtung 33 und die Speichervorrichtung 34, sowie Schnittstelleneinrichtungen 103. Die Recheneinheit 30 bzw. die Schnittstelleneinrichtungen 103, insbesondere eine Schnittstellenkarte, ist mit weiteren Baugruppen 28 und/oder mit Handhabungsvorrichtungen 97, Bearbeitungsvorrichtungen 98 und/oder einem Prozessleitsystem 99, insbesondere einer Zentralrecheneinheit 100, verbunden. Die Eingabevorrichtung 32 umfasst bevorzugt eine Tastatur, ein Mauszeigegerät, einen Scanner, insbesondere ein Strichcodelesegerät, und ein oder mehrere Tastschalter, sowie gegebenenfalls einen Touch-Screen. Die Ausgabevorrichtung 33 umfasst einen Bildschirm, insbesondere einen Touch-Screen, und gegebenenfalls ein oder mehrere Beleuchtungsvorrichtungen, Signallampen und/oder Lautsprecher, insbesondere eine Signalhupe. Die Speichervorrichtung 34 umfasst bevorzugt RAM- und/oder ROM-Speicherelemente und zumindest einen Datenträger, insbesondere einen Wechseldatenträger. Eine der Baugruppen 28 ist mit einer der Sensorvorrichtungen 4 verbunden und umfasst vorzugsweise eine Auswertevorrichtung 38, insbesondere eine Dekodiereinrichtung 104, zum Dekodieren eines Strichcodes. Die Sensorvorrichtung 4 ist dabei bevorzugt durch einen optischen Sensor 105 gebildet, welcher so angeordnet ist, dass dieser einen an der Umfangsseite 27 - Fig. 2 - des Messobjektes 2 - Fig. 2 - befindlichen Code 51 - Fig. 2 - bzw. eine Orientierungsmarkierung - Fig. 2 - einlesen kann. Der Sensor 105, welcher insbesondere durch einen Triangulationssensor 106 gebildet ist, überträgt die Messsignale an die Auswertevorrichtung 38 bzw. an die Dekodiereinrichtung 104. Über die Verbindung 96, insbesondere die Datenübertragungsleitung, werden die ausgewerteten Daten an die Recheneinheit 30 übermittelt.

Eine weitere Steuerbaugruppe 28 umfasst die Steuervorrichtung 36 für die Positioniervorrichtung 13 - Fig. 1 - und gegebenenfalls die Auswertevorrichtung 38 für die Sensorvorrichtung 4, welche bevorzugt zum Vermessen von Konturpunkten an der Stirnseite 15 - Fig. 2 - des Messobjektes 2 - Fig. 2 - mit dem optischen Sensor 107 ausgebildet ist bzw. hierfür angeordnet ist. Mit der weiteren Steuerbaugruppe 28 sind bevorzugt die Antriebsvorrichtungen 20, 21 - Fig. 1 - für die Positioniervorrichtung 13 - Fig. 1 - sowie die Sensorvorrichtung 4 und die Antriebsvorrichtung 10 für die Fördervorrichtung 3 - Fig. 1 - verbunden.

Eine weitere, dritte Steuerbaugruppe 28 umfasst eine Steuervorrichtung 37, welche zum Steuern von pneumatischen und/oder hydraulischen Antriebsvorrichtungen 77, 58 ausgebildet ist. Die Steuervorrichtung 37 ist dabei durch pneumatische und/oder hydraulische Leitungen 108 mit den Antriebsvorrichtungen 58, 77 verbunden.

Zur Weitergabe von durch die Sensorvorrichtung 4 eingelesene Messdaten ist die Steuereinrichtung 5 bevorzugt mittels der Schnittstelleneinrichtung 103 mit den weiteren Handhabungsvorrichtungen 97, welche beispielsweise Messobjekte 2 -Fig. 2 - zur Vorrichtung 1 - Fig. 1 - zuführen bzw. von dieser abtransportieren, verbunden. Dadurch kann die Vorrichtung 1 - Fig. 1 - den Handhabungsvorrichtungen 97, beispielsweise Informationen des eingelesenen Codes 51 - Fig. 2 - und/oder einer aufgrund der Orientierungsmarkierung 48 - Fig. 2 - ermittelten Orientierung 49 - Fig. 2 - des Messobjektes - Fig. 2 - mitteilen bzw. diesen mitteilen, wann das Messobjekt - Fig. 2 - fertig vermessen ist und/oder ein weiteres Messobjekt 2 der Vorrichtung 1 zum automatischen Vermessen zugeführt werden kann.

Aufgrund der in Der Markierung 25 - Fig. 2 - bzw. im Code 51 - Fig. 2 - eingelesenen Informationen kann den Handhabungsvorrichtungen 97, welche das Messobjekt 2 - Fig. 2 - nach dem Vermessen weitertransportieren, mitgeteilt werden, um welche Art von Messobjekt 2 es sich handelt und/oder zu welcher folgenden Bearbeitungsvorrichtung 98 bzw. Fertigungsvorrichtung das Messobjekt 2 in einem nächsten Schritt zugeführt werden soll.

Einer dem Messprozess nachstehenden Bearbeitungsvorrichtung 98 können durch die Verbindung 96 und die Schnittstelleneinrichtung 103 Messdaten zur Verfügung gestellt werden, worauf die Bearbeitungsvorrichtung 98 auf mögliche Formungenauigkeiten des Messobjektes 2 - Fig. 2 - reagieren kann. Die Bearbeitungsvorrichtungen 98 und/oder Handhabungsvorrichtungen 97 können in einem Prozessablauf der Vorrichtung 1 - Fig. 1 - zum Vermessen der Messobjekte 2 - Fig. 2 - vor- und/oder nachgeordnet sein.

Durch das Prozessleitsystem 99 bzw. die Zentralrecheneinheit 100 kann die Steuereinrichtung 5 bzw. die Vorrichtung 1 zum Vermessen der Messobjekte 2 - Fig. 2- gesteuert werden. Weiters können mit der Zentralrecheneinheit 100 Messdaten gespeichert und/oder ausgewertet werden.

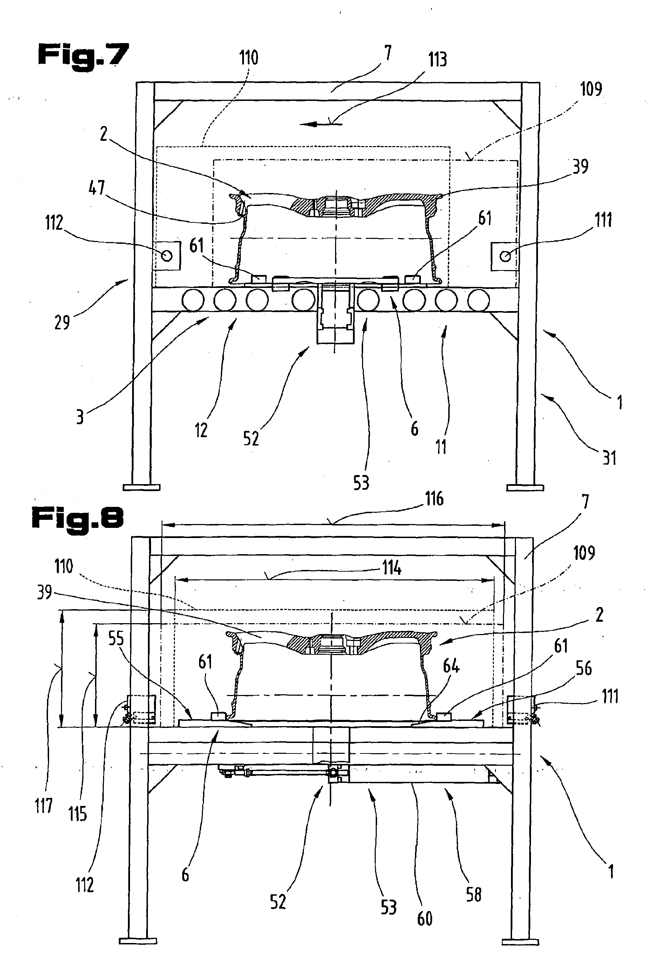

In der Fig. 7 ist eine Detaildarstellung einer weiteren und gegebenenfalls für sich eigenständigen Ausführungsform der Vorrichtung 1 - Fig. 1 - zum. Vermessen des, insbesondere zumindest annähernd drehsymmetrischen, Messobjektes 2 gezeigt, wobei wiederum für gleiche Teile gleiche Bezugszeichen bzw. Bauteilbezeichnungen, wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

In Fig. 7 ist eine Seitenansicht des Grundgestells 7, der Drehstation 52 mit dem gehalterten Messobjekt 2 und der Fördervorrichtung 3 dargestellt.

Weiters wird ein Annahmeraum 109 und ein Abgaberaum 110 sowie Sensoren 111, 112, welche sich im Annahmeraum 109 und oder im Abgaberaum 110 befinden bzw. angeordnet sind, dargestellt. Der Annahmeraum 109 ist jener Raum, welcher zum Zuführen des Messobjektes 2, insbesondere der Felge 39, von der Fördervorrichtung 3, insbesondere der Annahmefördervorrichtung 11 und/oder einer Handhabungsvorrichtung 97 zum Zuführen des Messobjektes 2 zur Haltevorrichtung 53 in Anspruch genommen wird. Vorzugsweise ist im Bereich des Annahmeraumes 109 der Sensor 111, welcher insbesondere durch einen optischen Sensor, beispielsweise einen Lichtschrankensensor, gebildet ist, angeordnet. Der Sensor 111 ist dabei derart am Grundgestell 7 befestigt, dass ein Zuführen des Messobjektes 2 frühzeitig erkannt werden kann. Der Sensor 111 ist dabei bevorzugt an der Rückseite 31 der Vorrichtung 1 bzw. des Grundgestells 7 angeordnet. Die Lichtführung des Lichtschrankensensors erfolgt bevorzugt in einer Ebene, welche in etwa normal auf die Beförderungsrichtung der Fördervorrichtung 3 liegt.

Unter dem Abgaberaum 110 ist jener Raum zu verstehen, welcher benötigt wird, um das Messobjekt 2 aus der Haltevorrichtung 6, 53, insbesondere durch die Fördervorrichtung 3 und/oder durch eine Handhabungsvorrichtung 97, zu entfernen bzw. abzutransportieren. Zum Detektieren des Verlassens des Messobjektes 2 der Vorrichtung 1 zum Vermessen des Messobjektes 2 ist im Abgaberaum der Sensor 112, welcher insbesondere durch einen Lichtschrankensensor gebildet ist, angeordnet. Bevorzugt ist der Sensor 112 im Abgaberaum 110 im Bereich der Frontseite 29 der Vorrichtung 1 bzw. des Grundgestells angeordnet. Eine Lichtführung des Lichtschrankensensors im Abgaberaum erfolgt wiederum bevorzugt in einer zur Transportrichtung 113 der Fördervorrichtung 3 normal liegenden Ebene.

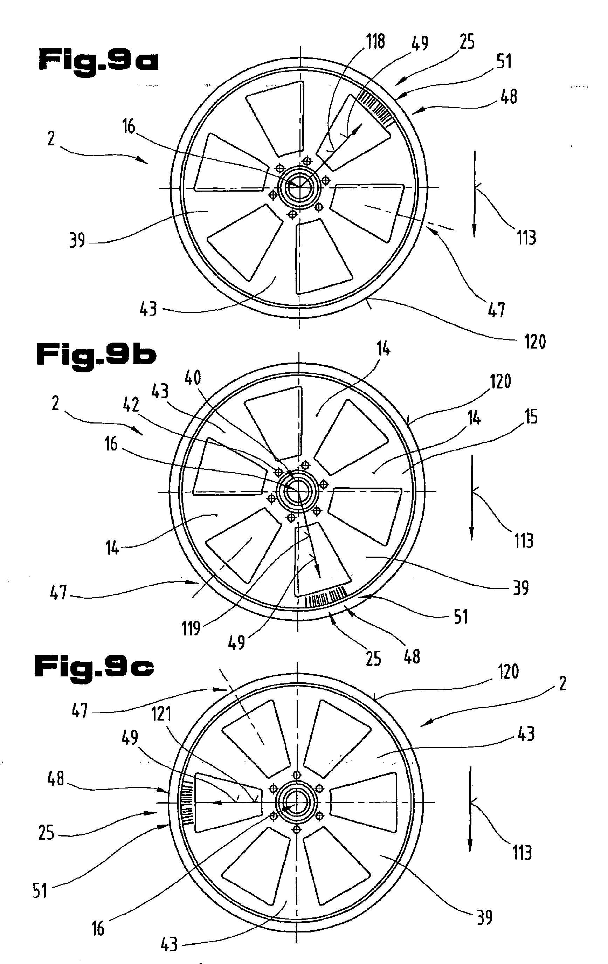

In der Fig. 8 ist eine Frontansicht der Detaildarstellung der Fig. 7 gezeigt, welche gegebenenfalls eine für sich eigenständige Ausführungsform darstellt. Für gleiche Teile werden wiederum gleich Bezugszeichen bzw. Bauteilbezeichnungen, wie in den vorangegangenen Fig. 1 bis 7 verwendet. Um unnötige Wiederholungen zu vermeiden, wird auf die detaillierte Beschreibung in den vorangegangenen Fig. 1 bis 7 hingewiesen bzw. Bezug genommen.

Der Annahmeraum 109 weist eine lichte Breite 114 von mindestens 500 mm, bevorzugt in etwa 900 mm bis 1.000 mm, insbesondere ca. 916 mm; auf. Die Höhe 115 des Annahmeraums 109 beträgt mindestens 100 mm, bevorzugt 300 mm bis in etwa 1.000 mm. Dadurch kann beispielsweise ein Roboterarm einer Handhabungsvorrichtung 97 das Messobjekt 2 sicher und berührungslos zur Drehstation 52, insbesondere der Haltevorrichtung 53, zuführen.

Der Abgaberaum 110 weist eine lichte Breite 116 von mindestens 500 mm, bevorzugt in etwa 900 mm bis 1.000 mm, insbesondere ca. 916 mm auf. Die Höhe 117 des Annahmeraums 109 beträgt mindestens 100 mm, bevorzugt 300 mm bis in etwa 1.000 mm. Dadurch kann beispielsweise ein Roboterarm einer Handhabungsvorrichtung 97 das Messobjekt 2 sicher und berührungslos zur Drehstation 52, insbesondere der Haltevorrichtung 53, zuführen.

In den gemeinsam beschriebenen Fig. 9a, 9b, 9c ist eine weitere und gegebenenfalls für sich eigenständige Ausführungsform des Messobjektes 2 gezeigt, wobei wiederum für gleiche Teile gleiche Bezugszeichen bzw. Bauteilbezeichnungen, wie in den vorangegangen Fig. 1 bis 8 verwendet werden. Um unnötige Wiederholungen zu vermeiden, wird auf die detaillierte Beschreibung in den vorangegangen Fig. 1 bis 8 hingewiesen bzw. Bezug genommen.

In den Fig. 9a, 9b, 9c werden verschiedenen Positionen des Messobjektes 2, insbesondere der Felge 39, in Bezug zur Transportrichtung 113 - siehe auch Fig. 7 - der Fördervorrichtung 3 - Fig. 1- dargestellt. Fig. 9a zeigt eine mögliche Annahmeorientierung 118. Die Annahmeorientierung 118 ist jene Orientierung 49 bzw. Ausrichtung des Messobjektes 2, welche das Messobjekt 2 beim bzw. unmittelbar nach dem Zuführen des Messobjektes zur Haltevorrichtung 53 - Fig. 3 - aufweist. Im Allgemeinen ist die Annahmeorientierung 118 bei der Zuführung des Messobjektes 2 unbestimmt. Die tatsächliche Orientierung 49 des Messobjektes 2 wird durch die Vorrichtung 1 - Fig. 1 - durch Einlesen der Markierung 25, insbesondere des Codes 51 und/oder der Orientierungsmarkierung 48, durch die Sensorvorrichtung 4 festgestellt.

Nachdem das Messobjekt 2 der Haltevorrichtung 53 - Fig. 3 - zugeführt wurde, wird dieses durch die Haltevorrichtung, insbesondere durch die Backen 61 - Fig. 3 -, fixiert. Bevorzugt werden dabei die Schlitten 55, 56 - Fig. 3 - der Haltevorrichtung 53 - Fig. 3 - mehrmals, insbesondere zwei- bzw. dreimal, zum Messobjekt 2 hin- und vom Messobjekt 2 wegbewegt. Dadurch wird das Messobjekt genau zentriert und mögliche Verunreinigungen besser beseitigt.

Nach dem Klemmvorgang des Messobjektes 2 durch die Haltevorrichtung 53 - Fig. 3 - wird das Messobjekt 2 durch die Hebevorrichtung 54 - Fig. 3 - angehoben, sodass der am Messobjekt 2, insbesondere als Relief, angeordnete Code 51 bzw. die Orientierungsmarkierung 48 durch eine Sensorvorrichtung 4, insbesondere durch den optischen Sensor 105, einlesbar ist. Bevorzugt erfolgt das Einlesen des Codes 51 bzw. der Orientierungsmarkierung 48 durch Drehen des Messobjektes 2 mittels der Drehstation 52 - Fig. 3 - und der Antriebsvorrichtung 75 - Fig. 3 - zum Drehen der Drehstation 52.

Das Einlesen der Orientierung 49 des Messobjektes 2 erfolgt bevorzugt durch ein Abtasten von Konturpunkten 14 des Messobjektes 2 durch die Sensorvorrichtung 4, insbesondere mittels eines Laser-Triangulationsverfahrens. Die Orientierung 49 des Messobjektes 2 wird bevorzugt durch Einlesen der Markierung 25, insbesondere der Orientierungsmarkierung 48, des Messobjekts 2 festgestellt. Weiters kann die Orientierung 49 des Messobjektes 2 durch ein Auswerten der abgetasteten Konturpunkte 14, insbesondere durch die Gestalt bzw. den Ort der Konturpunkte 14, erfolgen, beispielsweise können Konturpunkte 14 im Bereich der Speichen 43 abgetastet werden und dadurch auf die Orientierung 49 des Messobjektes 2 rückgeschlossen werden.

Mit Hilfe der Kenntnis über die Orientierung 49 des Messobjektes 2 wird das Messobjekt 2 im Anschluss in eine definierte Messorientierung 119 bzw. Messposition gedreht.

Bevorzugt wird zuerst die Drehachse 16 des Messobjektes 2 vermessen. Dabei wird die Au-ßenkontur 120 des Messobjektes 2 an zumindest drei Stellen, welche beispielsweise im Winkel von jeweils 120° zueinander um die Drehachse angeordnet sind, durch die Sensorvorrichtung 4, insbesondere den Sensor 107, überfahren. Dadurch kann die Lage der Außenkontur 120 erfasst werden und der Mittelpunkt des drehsymmetrischen Messobjektes 2 und somit die Lage der Drehachse 16 durch die Steuereinrichtung 5, insbesondere der Recheneinheit 30, errechnet werden.

Aufgrund der aus der Markierung 25, insbesondere von der Orientierungsmarkierung 48 und/oder vom Code 51, ausgelesenen Information wird ein spezielles Messprogramm gestartet. Das Messprogramm kann für jedes individuelle Messobjekt 2 bzw. für jede Felge 39 und/oder der Orientierung 49 spezielle Konturpunkte 14 des Messobjektes 2 vermessen. Beispielsweise kann für eine Felge 39 - Fig. 2 - ein Messprogramm bzw. Messablauf hinterlegt sein, welches pro Speiche 43 - Fig. 2 - einen Messpunkt bzw. Konturpunkt 14 einliest. Aufgrund der Markierung 25 und der darin enthaltenen Information kann festgestellt werden wie viele Speichen 43 zu vermessen sind und an welcher Stelle sich die Messpunkte befinden.

Beim Messablauf werden speziell für das betreffende Messobjekt 2 programmierte Konturpunkte 14, insbesondere an der Stirnseite 15 des Messobjektes 2, eine Radnabenbohrung 40, das Ventilloch 47, die Speichen 43, Schraublöcher 42, der Lochkreis 41 - Fig. 2 - und/oder weitere Merkmale der Gestalt des Messobjektes 2 bzw. der Felge 39 vermessen.

Die eingelesenen Messdaten werden in der Recheneinheit 30 - Fig. 6 - ausgewertet und/oder gespeichert und/oder an eine Handhabungsvorrichtung 97, Bearbeitungsvorrichtung 98 und/oder das Prozessleitsystem 99 weitergegeben.

Nach dem eigentlichen Messvorgang wird das Messobjekt 2 gegebenenfalls in eine Abgabeorientierung 121 gedreht. Gegebenenfalls wird das Messobjekt 2 mittels der Hebevorrichtung 54 abgesenkt. Bevorzugt bleibt das Messobjekt 2 bis zur Übernahme durch eine nachfolgende Handhabungsvorrichtung 97 - Fig. 6 - geklemmt. Im Anschluss werden die Schlitten 55, 56 - Fig. 3 - auseinander bewegt und in eine Aufnahmeposition für ein weiteres Messobjekt gebracht.

Der Ordnung halber sei abschließend darauf hingewiesen, dass zum besseren Verständnis des Aufbaus der Vorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3; 4; 5; 6; 7, 8; 9 gezeigten Ausführungen den Gegenstand von eigenständigen; erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Vorrichtung
- 2: Messobjekt
- 3: Fördervorrichtung
- 4: Sensorvorrichtung
- 5: Steuereinrichtung

- 6: Haltevorrichtung
- 7: Grundgestell
- 8: Rolle
- 9: Zugmitteltrieb
- 10: Antriebsvorrichtung
- 11: Annahmefördervorrichtung
- 12: Abgabefördervorrichtung
- 13: Positioniervorrichtung
- 14: Konturpunkt
- 15: Stirnseite

- 16: Drehachse
- 17: Richtung
- 18: Richtung
- 19: Richtung
- 20: Antriebsvorrichtung

- 21: Antriebsvorrichtung
- 22: Führungsbahn
- 23: Schlitten
- 24: Führungsbahn
- 25: Markierung

- 26: Schlitten
- 27: Umfangseite
- 28: Steuerbaugruppe
- 29: Frontseite
- 30: Recheneinheit

- 31: Rückseite
- 32: Eingabevorrichtung
- 33: Ausgabevorrichtung
- 34: Speichervorrichtung
- 35: Sicherheitsbedienelement

- 36: Steuervorrichtung
- 37: Steuervorrichtung
- 38: Auswertevorrichtung
- 39: Felge
- 40: Radnabenbohrung

- 41: Lochkreis
- 42: Schraubenloch
- 43: Speiche
- 44: Felgenbett
- 45: Felgenschulter

- 46: Felgenhorn
- 47: Ventilloch
- 48: Orientierungsmarkierung
- 49: Orientierung
- 50: Steg

- 51: Code
- 52: Drehstation
- 53: Haltevorrichtung
- 54: Hebevorrichtung
- 55: Schlitten

- 56: Schlitten
- 57: Zugmitteltrieb
- 58: Antriebsvorrichtung
- 59: Linearantrieb
- 60: Pneumatikzylinder

- 61: Backe
- 62: Backengrundkörper
- 63: Backengrundkörper
- 64: Abschrägung
- 65: Klemmrichtung

- 66: Führungsplatte
- 67: Verbindungsvorrichtung
- 68: Umlenkvorrichtung
- 69: Antriebsabschnitt
- 70: Antriebsabschnitt

- 71: Riementrieb
- 72: Zahnriementrieb
- 73: Kolbenstange
- 74: Abschnitt
- 75: Antriebsvorrichtung

- 76: Servomotor
- 77: Antriebsvorrichtung
- 78: Linearantrieb
- 79: Pneumatikzylinder
- 80: Führungsvorrichtung

- 81: Führungsbahn
- 82: Befestigungssäule
- 83: Niveaueinstellvorrichtung
- 84: Fußverstellvorrichtung
- 85: Höhenverstellvorrichtung

- 86: Höhenverstellvorrichtung
- 87: Fuß
- 88: Gewindespindel
- 89: Mutter
- 90: Bodenplatte

- 91: Bauteil
- 92: Schraube
- 93: Bauteil
- 94: Langloch
- 95: Langloch

- 96: Verbindung
- 97: Handhabungsvorrichtung
- 98: Bearbeitungsvorrichtung
- 99: Prozessleitsystem
- 100: Zentralrecheneinheit

- 101: Datenübertragungsleitung
- 102: Prozessoreinheit
- 103: Schnittstelleneinrichtung
- 104: Dekodiereinrichtung
- 105: Sensor

- 106: Triangulationssensor
- 107: Sensor
- 108: Leitung
- 109: Annahmeraum
- 110: Abgaberaum

- 111: Sensor
- 112: Sensor
- 113: Transportrichtung
- 114: Breite
- 115: Höhe

- 116: Breite
- 117: Höhe
- 118: Annahmeorientierung
- 119: Messorientierung
- 120: Außenkontur

- 121: Abgabevorrichtung

## Patentansprüche

1. Vorrichtung (1) zum automatischen Vermessen von, insbesondere zumindest annähernd drehsymmetrischen, Messobjekten (2) umfassend mindestens eine berührungslos messende Sensorvorrichtung (4) zum Erfassen von Konturpunkten (14), **dadurch gekennzeichnet, dass** die Sensorvorrichtung (4) und/oder das Messobjekt (2) mittels einer Positioniervorrichtung (13), welche eine Antriebsvorrichtung (20, 21) umfasst, verstellbar ist und die Sensorvorrichtung (4), insbesondere ein Sensor (107) und/oder ein weiterer Sensor (105), zum Erfassen einer am Messobjekt (2) angeordneten Markierung (25) ausgebildet ist.

2. Vorrichtung (1) nach Anspruch 1, **dadurch gekennzeichnet, dass** das Messobjekt (2) durch eine Felge (39) gebildet ist.

3. Vorrichtung (1) nach Anspruch 1 oder 2, **dadurch gekennzeichnet, dass** eine Fördervorrichtung (3) zum Befördern des Messobjektes (2) in eine Messposition angeordnet ist.

4. Vorrichtung (1) nach Anspruch 1 bis 3, **dadurch gekennzeichnet, dass** die Sensorvorrichtung (4), insbesondere der Sensor (105) und/oder der weitere Sensor (107), mit einer elektronischen Steuereinrichtung (5) verbunden ist.

5. Vorrichtung (1) nach Anspruch 4, **dadurch gekennzeichnet, dass** die elektronische Steuereinrichtung (5) mindestens eine elektronische Auswertevorrichtung (38) umfasst.

6. Vorrichtung (1) nach Anspruch 5, **dadurch gekennzeichnet, dass** die elektronische Auswertevorrichtung (38) zum Dekodieren der Markierung (25), insbesondere eines in der Markierung (25) enthaltenen Codes (51), ausgebildet ist.

7. Vorrichtung (1) nach Anspruch 4 oder 5, **dadurch gekennzeichnet, dass** die elektronische Auswertevorrichtung (38) zum Umwandeln einer Position eines gemessenen Konturpunktes (14) in einen elektronisch verarbeitbaren Wert ausgebildet ist.

8. Vorrichtung (1) nach einem der Ansprüche 4 bis 7, **dadurch gekennzeichnet, dass** die elektronische Steuereinrichtung (5) mindestens eine Recheneinheit (30), insbesondere einen Industrie-PC, umfasst.

9. Vorrichtung (1) nach einem der Ansprüche 4 bis 8, **dadurch gekennzeichnet, dass** die Steuereinrichtung (5), insbesondere die Recheneinheit (30), eine Speichervorrichtung (34), insbesondere zum Speichern elektronisch verarbeitbarer Daten und/oder Programme, umfasst.

10. Vorrichtung (1) nach einem der Ansprüche 4 bis 9, **dadurch gekennzeichnet, dass** die Steuereinrichtung (5) eine Schnittstelleneinrichtung (103), insbesondere zum Übertragen von Daten an Handhabungsvorrichtungen (97), an Bearbeitungsvorrichtungen (98) und/oder ein Prozessleitsystem (99), umfasst.

11. Vorrichtung (1) nach einem der Ansprüche 1 bis 10, **dadurch gekennzeichnet, dass** die Sensorvorrichtung (4), insbesondere der Sensor (107), zum Erfassen von Konturpunkten (14) ausgebildet ist, welche an einer Stirnseite (15) des Messobjektes (2) liegen.

12. Vorrichtung (1) nach einem der Ansprüche 1 bis 11, **dadurch gekennzeichnet, dass** die Sensorvorrichtung (4), insbesondere der weitere Sensor (105), zum Erfassen von Konturpunkten (14) ausgebildet ist, welche auf der Umfangseite (27) des Messobjektes (2) liegen.

13. Vorrichtung (1) nach einem der Ansprüche 1 bis 12, **dadurch gekennzeichnet, dass** die Markierung (25), insbesondere der Code (51), als Relief am Messobjekt (2) ausgebildet ist.

14. Vorrichtung (1) nach Anspruch 13, **dadurch gekennzeichnet, dass** das Relief durch Stege (50) und/oder Vertiefungen gebildet ist.

15. Vorrichtung (1) nach Anspruch 14, **dadurch gekennzeichnet, dass** die Stege (50) oder Vertiefungen parallel zu einer Drehachse (16) des Messobjektes (2) liegen.

16. Vorrichtung (1) nach einem der Ansprüche 1 bis 15, **dadurch gekennzeichnet, dass** die Positioniervorrichtung (13) zumindest zwei normal zueinander liegende und normal auf eine Drehachse (16) des Messobjektes (2) liegende Führungsbahnen (22, 24) aufweist.

17. Vorrichtung (1) nach einem der Ansprüche 1 bis 16, **dadurch gekennzeichnet, dass** eine Haltevorrichtung (6, 53) zum zeitweisen Haltern des Messobjektes (2), insbesondere der Felge (39), angeordnet ist.

18. Vorrichtung (1) nach Anspruch 17, **dadurch gekennzeichnet, dass** die Haltevorrichtung (6, 53), insbesondere in Richtung der Drehachse (16) des Messobjektes (2), drehbar ist.

19. Vorrichtung (1) nach Anspruch 17 oder 18, **dadurch gekennzeichnet, dass** die Haltevorrichtung (6, 53) mit einer Antriebsvorrichtung (75, 77) zum Drehen und/oder Positionieren verbunden ist.

20. Vorrichtung (1) nach einem der Ansprüche 1 bis 19, **dadurch gekennzeichnet, dass** eine Hebevorrichtung (54) zum Positionieren des Messobjektes (2) in Richtung der Drehachse (16) des Messobjektes (2) angeordnet ist.

21. Vorrichtung (1) nach Anspruch 20, **dadurch gekennzeichnet, dass** die Hebevorrichtung (54) eine Antriebsvorrichtung (77), insbesondere einen Pneumatikzylinder (79), umfasst.

22. Vorrichtung (1) nach einem der Ansprüche 1 bis 21, **dadurch gekennzeichnet, dass** eine oder mehrere Antriebsvorrichtungen (20, 21; 58; 75; 77), gegebenenfalls zumindest indirekt, insbesondere über eine pneumatische und/oder hydraulische Steuervorrichtung (37), mit einer elektronischen Steuereinrichtung (5) verbunden ist.

23. Vorrichtung (1) nach einem der Ansprüche 1 bis 22, **dadurch gekennzeichnet, dass** eine lichte Breite (114; 116) eines Abgaberaumes (110) und/oder eines Annahmeraumes (109) für das Messobjekt (2) zumindest in etwa 500 mm, insbesondere im Bereich von 950 mm, beträgt.

24. Vorrichtung (1) nach Anspruch 23, **dadurch gekennzeichnet, dass** im Abgaberaum (110) und/oder im Annahmeraum (109) ein Sensor (111; 112) zum Erkennen eines Messobjektes (2) angeordnet ist.

25. Vorrichtung (1) nach Anspruch 24, **dadurch gekennzeichnet, dass** der Sensor (111; 112) durch einen Lichtschrankensensor gebildet ist.

26. Verfahren zum optischen Vermessen, insbesondere mit einer Vorrichtung (1) nach einem der Ansprühe 1 bis 25, eines zumindest annähernd rotationssymmetrischen Messobjektes (2), insbesondere einer Felge (39), mit mindestens einer berührungslos messenden Sensorvorrichtung (4) zum Erfassen von Konturpunkten (14), **gekennzeichnet durch** Einlesen der Orientierung (49) des Messobjektes (2) **durch** die Sensorvorrichtung (4).

27. Verfahren nach Anspruch 26, **gekennzeichnet durch** Zuführen des Messobjektes (2) in eine Messposition **durch** eine Fördervorrichtung (3).

28. Verfahren nach Anspruch 26 oder 27, **gekennzeichnet durch** Klemmen des Messobjektes (2) mittels einer Haltevorrichtung (6; 53).

29. Verfahren nach einem der Ansprüche 26 bis 28, **gekennzeichnet durch** Anheben des Messobjekts (2), insbesondere **durch** Anheben der Haltevorrichtung (6; 53), **durch** eine Hebevorrichtung (54).

30. Verfahren nach einem der Ansprüche 26 bis 29, **gekennzeichnet durch** Drehen des Messobjektes (2) um die eigene Drehachse (16) zum Erkennen einer an der Umfangseite (27) liegenden Orientierungsmarkierung (48).

31. Verfahren nach einem der Ansprüche 26 bis 30, **gekennzeichnet durch** Drehen des Messobjektes (2) um die eigene Drehachse (16) zum Einlesen eines an der Umfangseite (27) liegenden Codes (51).

32. Verfahren nach einem der Ansprüche 26 bis 31, **gekennzeichnet durch** Einlesen einer am Messobjekt (2) angeordneten Markierung (25), insbesondere **durch** Einlesen eines als Relief am Messobjekt (2) angeordneten Codes (51).

33. Verfahren nach einem der Ansprüche 26 bis 32, **gekennzeichnet durch** Verwenden eines Triangulationsverfahrens zum Aufnehmen der Positionswerte der Konturpunkte (14).

34. Verfahren nach Anspruch 31 oder 32, **gekennzeichnet durch** Abrufen eines dem eingelesenen Code (51) entsprechendes Ablaufprogrammes aus einer Speichervorrichtung (34).

35. Verfahren nach einem der Ansprüche 26 bis 34, **gekennzeichnet durch** Ermitteln der Drehachse (16) des Messobjektes (2) mittels Überfahren einer Außenkontur (120) des Messobjektes (2) an mindestens drei Stellen.

36. Verfahren nach einem der Ansprüche 26 bis 35, **gekennzeichnet durch** Aufnehmen von Konturpunkten (14) entsprechend eines in der Speichervorrichtung (34) abgelegten Ablaufprogrammes.

37. Verfahren nach einem der Ansprüche 26 bis 36, **gekennzeichnet durch** Drehen des Messobjektes (2) in eine Abgabeorientierung (121).

38. Verfahren nach einem der Ansprüche 26 bis 37, **gekennzeichnet durch** Bereitstellen der Positionswerte der Konturpunkte (14) für Handhabungsvorrichtungen (97), Bearbeitungsvorrichtungen (98) und/oder ein Prozessleitsystem (99).

39. Datenträger, **dadurch gekennzeichnet, dass** auf diesem ein Programm zur Ausführung eines Verfahrens nach einem der Ansprüche 26 bis 38 gespeichert ist.
